# EUROPEAN PATENT APPLICATION

(11) **EP 4 506 309 A1**
(43) Date of publication of application: **12.02.2025**
(21) Application number: 23869697.5
(22) Date of filing: 02.06.2023
(51) Int. Cl.: C01G 53/00, H01M 4/505, H01M 10/054, H01M 4/525

(54) **PRECURSOR FOR SODIUM-ION BATTERY POSITIVE ELECTRODE MATERIAL AND PREPARATION METHOD THEREFOR, SODIUM-ION BATTERY POSITIVE ELECTRODE MATERIAL, SODIUM-ION BATTERY, AND ELECTRICAL DEVICE**

(30) Priority: 28.09.2022 CN 202211188250
(71) Applicant: CNGR Advanced Material Co., Ltd., Tongren, Guizhou 554300 (CN)
(72) Inventor: YIN, Shuo, Changsha, Hunan 410000 (CN); LI, Wei, Changsha, Hunan 410000 (CN); ZHANG, Yuying, Changsha, Hunan 410000 (CN); LIN, Yijia, Changsha, Hunan 410000 (CN); LIU, Xiaohu, Changsha, Hunan 410000 (CN)
(74) Representative: Locas, Davide
(86) International application number: PCT/CN2023/098145
(87) International publication number: WO 2024/066445

(57) **Abstract**

The present invention provides a precursor for sodium-ion battery positive electrode material and a preparation method therefor, a sodium-ion battery positive electrode material, a sodium-ion battery, and an electrical device, and relates to the field of batteries. Provided is a precursor for sodium-ion battery positive electrode material, which has a chemical general formula of NiₓMn_{y}Fe_{1-x-y}(OH)₂, wherein 0.15≤x≤0.35, and 0.2≤y≤0.5. The precursor for sodium-ion battery positive electrode material contains a S element with a content of ≤ 4000 ppm, and has a Na/S mass ratio of ≤ 1.5. By means of the precursor for sodium-ion battery positive electrode material provided by the present invention, the prepared positive electrode material is very good in element uniformity, few in structural defects, controllable in particle size, good in degree of sphericity, and high in energy density. With the retention of the content of trace sulfur impurities, the lower the sodium-sulfur ratio, the better the battery capacity, first efficiency, and cycle performance at the same level of sulfur content.

## Description

### CROSS-REFERENCE TO RELATED APPLICATION

The present disclosure claims the priority to the Chinese patent application with the filing number 202211188250.3 filed with the China National Intellectual Property Administration on September 28, 2022 and entitled "SODIUM-ION BATTERY POSITIVE ELECTRODE MATERIAL AND PREPARATION METHOD THEREFOR, SODIUM-ION BATTERY POSITIVE ELECTRODE MATERIAL, SODIUM-ION BATTERY AND ELECTRICAL DEVICE", the contents of which are incorporated herein by reference in entirety.

### TECHNICAL FIELD

The present disclosure relates to the field of batteries, and particularly to a sodium-ion battery positive electrode material precursor and a preparation method therefor, a sodium-ion battery positive electrode material, a sodium-ion battery and an electrical device.

### BACKGROUND ART

The problems of lack and high costs of lithium resources restrict the application of lithium-ion batteries in the field of large-scale energy storage. Sodium-ion batteries with abundant resources and low costs are expected to replace the lithium-ion batteries in this field, while a positive electrode material is a decisive factor that restricts the development of the sodium-ion batteries. Layered transition metal oxides, a class of sodium-ion battery positive electrode materials with a high capacity and a good stability, have a system and working principle similar to those of the lithium-ion batteries, and thus have received widespread attention from researchers. However, commercialization of such materials is still hindered by problems such as a low energy density and a relatively poor cycle life.

How to synthesize a positive electrode material with a higher energy density, a higher capacity, and a longer cycle life to solve the above problems related to the sodium-ion batteries becomes a problem to be researched and solved in the art.

### SUMMARY

The present disclosure aims at providing a sodium-ion battery positive electrode material precursor and a preparation method therefor, a sodium-ion battery positive electrode material, a sodium-ion battery and an electrical device, so as to solve the above problems.

In order to achieve the above objective, the present disclosure adopts the following technical solutions.

A sodium-ion battery positive electrode material precursor, wherein a general chemical formula thereof is NiₓMn_{y}Fe_{1-x-y}(OH)₂, where 0.15≤x≤0.35 and 0.2≤y≤0.5; and
a content of S element in the sodium-ion battery positive electrode material precursor is < 4000 ppm.

Optionally, the precursor further contains Na, and a Na/S mass ratio is ≤ 1.5.

Optionally, the sodium-ion battery positive electrode material precursor meets at least one of the following conditions:
A. the content of the S element in the sodium-ion battery positive electrode material precursor is 800-3700 ppm, and the Na/S mass ratio is ≤ 1.18; optionally, the content of the S element in the sodium-ion battery positive electrode material precursor is 1700-2800 ppm, and the Na/S mass ratio is ≤ 0.45;
B. D50 of the sodium-ion battery positive electrode material precursor is 3-14 µm, preferably 5-10 µm;
C. a specific surface area of the sodium-ion battery positive electrode material precursor is 6-11 m²/g, preferably 6-8 m²/g;
D. a tap density of the sodium-ion battery positive electrode material precursor is ≥1.7 g/cm³, preferably 1.9-2.3 g/cm³; and
E. the sodium-ion battery positive electrode material precursor is spherical or spheroidal.

The present disclosure further provides a preparation method for the sodium-ion battery positive electrode material precursor, including:
mixing raw materials including a nickel source, a manganese source, a ferrous source and water to obtain a mixed salt solution, and mixing materials including water, a part of a complexing agent and a part of a precipitating agent to obtain a base solution; and
adding the remaining complexing agent, the remaining precipitating agent and the mixed salt solution to the base solution to carry out a co-precipitation reaction, performing a solid-liquid separation to obtain solid matters, and then performing alkali washing, water washing, and drying, to obtain the sodium-ion battery positive electrode material precursor;

In the above, at least one of the nickel source, the manganese source and the ferrous source includes sulfate.

Optionally, the preparation method for the sodium-ion battery positive electrode material precursor meets at least one of the following conditions:
a. the nickel source includes one or more of nickel sulfate, nickel nitrate, and nickel acetate, the manganese source includes one or more of manganese sulfate, manganese nitrate, and manganese acetate, and the ferrous source includes one or more of ferrous sulfate, ferrous nitrate, and ferrous chloride;
b. a concentration of the mixed salt solution is 1.0-2.2 mol/L;
c. the precipitating agent includes sodium hydroxide and/or potassium hydroxide, and the complexing agent includes one or more of ammonium bicarbonate, ammonium carbonate, and ammonia water;
d. the complexing agent is used in a form of aqueous solution, and has a concentration of 0.3-8 mol/L, and optionally, the concentration is 0.3-2.0 mol/L;
e. the water used for preparing the base solution has a temperature of 40-60 °C, and the prepared base solution is heated to have a temperature of 40-60 °C; and pH of the base solution is 10-12;
f. a flow rate of adding the mixed salt solution to the base solution is 2%/h - 8%/h of an available volume of a reaction kettle, a flow rate of adding the precipitating agent to the base solution is 0.08%/h - 0.32%/h of the available volume of the reaction kettle, and a flow rate of adding the complexing agent to the base solution is 0.04%/h - 0.16%/h of the available volume of the reaction kettle;
g. the co-precipitation reaction is carried out under a stirring condition, and a stirring speed is 300-1000 r/min;
h. an end point of the co-precipitation reaction is the D50 of the sodium-ion battery positive electrode material precursor reaching 3-14 µm; and
i. an end point of the water washing (namely, a standard of completion of the water washing) is electrical conductivity of a washing solution (namely, a mother liquor obtained by filtration after the washing) being less than 50 µS/cm, the drying is performed at a temperature of 120-180 °C, and lasts for 10-16 h, and an end point of the drying is a moisture content of the materials being less than or equal to 0.6 wt%.

Optionally, a staged control is performed on the flow rates of adding the remaining complexing agent, the remaining precipitating agent and the mixed salt solution to the base solution.

Optionally, the staged control may include:
in a first stage, a first flow rate of adding the mixed salt solution to the base solution is controlled to be 2%/h - 4%/h of the available volume of the reaction kettle, a first flow rate of adding the precipitating agent to the base solution is controlled to be 0.08%/h - 0.16%/h of the available volume of the reaction kettle, and a first flow rate of adding the complexing agent to the base solution is controlled to be 0.04%/h - 0.08%/h of the available volume of the reaction kettle, until D50 of a first precipitate obtained is 3-5 µm; and
in a second stage, a second flow rate of adding the mixed salt solution to the base solution is controlled to be 4%/h - 8%/h of the available volume of the reaction kettle, a second flow rate of adding the precipitating agent to the base solution is controlled to be 0.16 - 0.32%/h of the available volume of the reaction kettle, and a second flow rate of adding the complexing agent to the base solution is controlled to be 0.08 - 0.16%/h of the available volume of the reaction kettle, until D50 of the sodium-ion battery positive electrode material precursor is 6-14 µm.

The available volume of the reaction kettle is a volume of the reaction kettle remained after the base solution is added when a liquid is not splashed out during stirring.

The first flow rates and the second flow rates of various solutions in the above are adjusted according to magnitude of D50 of a target material.

The present disclosure further provides a sodium-ion battery positive electrode material, prepared through reaction of the sodium-ion battery positive electrode material precursor with a sodium source.

Optionally, a molar ratio of a sum of nickel, manganese and iron in the sodium-ion battery positive electrode material precursor to sodium in the sodium source is 1 : (1.02-1.07); and

Optionally, temperature programming is performed in the reaction for calcination:
heating to 780-880 °C at a heating rate of 2-4 °C/min to perform the calcination for 10-20 hours.

The present disclosure further provides a sodium-ion battery, wherein raw materials thereof include the sodium-ion battery positive electrode material.

The present disclosure further provides an electrical device, including the sodium-ion battery.

Compared with the related art, the beneficial effects of the present disclosure at least include:
The sodium-ion battery positive electrode material precursor provided in the present disclosure, based on nickel-manganese-iron hydroxide, improves material performances by optimizing the content of sulfur element and the sodium-sulfur mass ratio. With the retention of the content of trace sulfur impurities, at the same sulfur content level, the lower the sodium-sulfur ratio is, the better the battery capacity, initial efficiency and cycle performance are. Within a range of 2-4.2 V, 0.1C initial discharge capacity is > 165 mAh/g, 1C discharge capacity is > 154 mAh/g, 50-cycle capacity retention rate under a 1C condition is > 78%, and charge and discharge speeds are high under a condition of high cycle efficiency.

Specifically: when trace non-sodium sulfate within a specific range in the sodium-ion battery positive electrode material precursor exists on surfaces of particles, lattice cracks generated during charge and discharge of the material may be inhibited. When the trace non-sodium sulfate is dissolved in an electrolyte, it facilitates diffusion of metal cations, reduces DCR (direct current resistance), and with the increase of the sulfur content, may increase the battery capacity, and improve the cycle and rate performances. However, a too high content of sulfate radicals will increase defects in the positive electrode material, thereby reducing crystallinity. Moreover, as sodium sulfate cannot improve the capacity performance, a higher sulfur content leads to a lower initial charge-discharge capacity, and volatilization of the sulfate during sintering will damage the equipment. In addition, a high sodium content (sodium sulfate or sodium hydroxide) in the precursor will reduce the degree of crystallinity of the precursor and have an adverse effect on the battery performances; therefore, at the same sulfur level, the lower the sodium-sulfur ratio is, the better the battery capacity, initial efficiency and cycle performance are, and the lower the cost is.

The positive electrode material precursor prepared by the preparation method for the sodium-ion battery positive electrode material precursor provided in the present disclosure has very good element uniformity, few structural defects, controllable particle size, good degree of sphericity, low sodium content, and moderate sulfur content.

The sodium-ion battery positive electrode material, the sodium-ion battery and the electrical device provided in the present disclosure have excellent electrical properties.

### BRIEF DESCRIPTION OF DRAWINGS

In order to more clearly illustrate the technical solutions of the examples of the present disclosure, the drawings that need to be used in the examples will be briefly introduced below. It should be understood that the following drawings merely show some examples of the present disclosure, and should not be considered as limitation to the scope of the present disclosure.

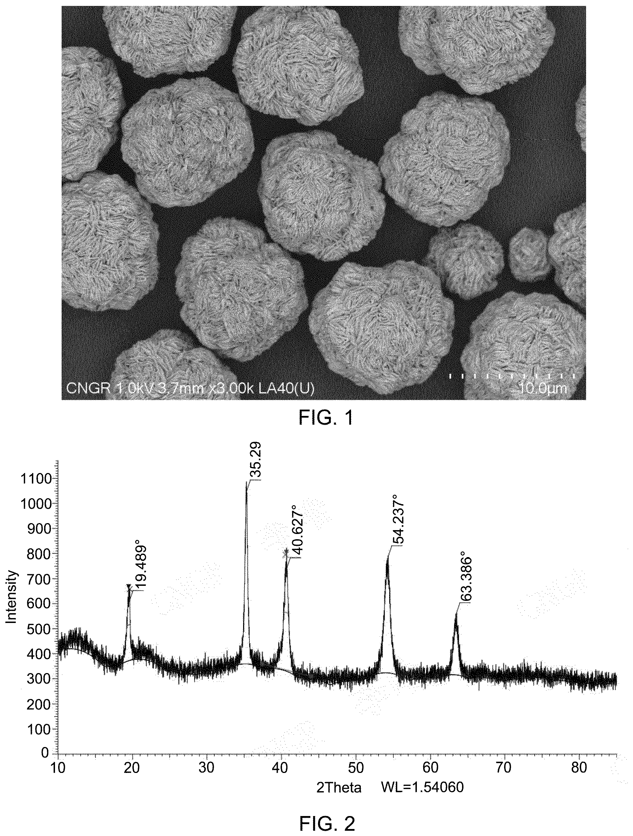

FIG. 1 is a scanning electron micrograph of a precursor obtained in Example 1;
FIG. 1 is an XRD spectrum of the precursor obtained in Example 1; and
FIG. 3 is a chart of changing trend of discharge capacity with sulfur content in some examples.

### DETAILED DESCRIPTION OF EMBODIMENTS

A sodium-ion battery positive electrode material precursor, having a general chemical formula of NiₓMn_{y}Fe_{1-x-y}(OH)₂, where 0.15≤x≤0.35 and 0.2≤y≤0.5.

A content of S element in the sodium-ion battery positive electrode material precursor is < 4000 ppm.

Optionally, the precursor further contains Na, and a Na/S mass ratio is ≤ 1.5.

Optionally, x may be 0.15, 0.20, 0.25, 0.30, 0.35 or any value within 0.15-0.35, and y may be 0.2, 0.3, 0.4, 0.5 or any value within 0.2-0.5.

In an optional embodiment, the sodium-ion battery positive electrode material precursor meets at least one of the following conditions:

A. The content of the S element in the sodium-ion battery positive electrode material precursor is 800-3700 ppm, and the Na/S mass ratio is ≤ 1.18. Optionally, the content of the S element in the sodium-ion battery positive electrode material precursor is 1700-2800 ppm, and the Na/S mass ratio is ≤ 0.45;

Optionally, the content of the S element in the sodium-ion battery positive electrode material precursor may be 800 ppm, 900 ppm, 1000 ppm, 1100 ppm, 1200 ppm, 1300 ppm, 1400 ppm, 1500 ppm, 1600 ppm, 1700 ppm, 1800 ppm, 1900 ppm, 2000 ppm, 2100 ppm, 2200 ppm, 2300 ppm, 2400 ppm, 2500 ppm, 2600 ppm, 2700 ppm, 2800 ppm, 2900 ppm, 3000 ppm, 3100 ppm, 3200 ppm, 3300 ppm, 3400 ppm, 3500 ppm, 3600 ppm, 3700 ppm or any value within 800-3700 ppm, and the Na/S mass ratio may be 0.10, 0.15, 0.20, 0.25, 0.30, 0.35, 0.40, 0.45, 0.50, 0.55, 0.60, 0.65, 0.70, 0.75, 0.80, 0.85, 0.90, 0.95, 1.00, 1.05, 1.10, 1.15, 1.18 or any value less than or equal to 1.18;

B. D50 of the sodium-ion battery positive electrode material precursor is 3-14 µm, preferably 5-10 µm;

Optionally, the D50 of the sodium-ion battery positive electrode material precursor may be 3 µm, 4 µm, 5 µm, 6 µm, 7 µm, 8 µm, 9 µm, 10 µm, 11 µm, 12 µm, 13 µm, 14 µm or any value within 3-14 µm;

C. A specific surface area of the sodium-ion battery positive electrode material precursor is 6-11 m²/g, preferably 6-8 m²/g;

Optionally, the specific surface area of the sodium-ion battery positive electrode material precursor may be 6 m²/g, 7 m²/g, 8 m²/g, 9 m²/g, 10 m²/g, 11 m²/g or any value within 6-11 m²/g;

D. A tap density of the sodium-ion battery positive electrode material precursor is ≥1.7 g/cm³, preferably 1.9-2.3 g/cm³;

Optionally, the tap density of the sodium-ion battery positive electrode material precursor may be 1.7 g/cm³, 1.8 g/cm³, 1.9 g/cm³, 2.0 g/cm³, 2.1 g/cm³, 2.2 g/cm³, 2.3 g/cm³ or any value within 1.9-2.3 g/cm³;

E. The sodium-ion battery positive electrode material precursor is spherical or spheroidal.

The present disclosure further provides a preparation method for a sodium-ion battery positive electrode material precursor, including:
mixing raw materials including a nickel source, a manganese source, a ferrous source, and water to obtain a mixed salt solution, and mixing materials including water, a part of a complexing agent and a part of a precipitating agent to obtain a base solution; and
adding the remaining complexing agent, the remaining precipitating agent and the mixed salt solution to the base solution to carry out a co-precipitation reaction, performing solid-liquid separation to obtain solid matters, and then performing alkali washing, water washing, and drying, to obtain the sodium-ion battery positive electrode material precursor, wherein
at least one of the nickel source, the manganese source and the ferrous source includes sulfate.

In an optional embodiment, the preparation method for a sodium-ion battery positive electrode material precursor meets at least one of the following conditions:
a. The nickel source includes one or more of nickel sulfate, nickel nitrate, and nickel acetate, the manganese source includes one or more of manganese sulfate, manganese nitrate, and manganese acetate, and the ferrous source includes one or more of ferrous sulfate, ferrous nitrate, and ferrous chloride.
b. A concentration of the mixed salt solution is 1.0-2.2 mol/L;
   optionally, the concentration of the mixed salt solution may be 1.0 mol/L, 1.1 mol/L, 1.2 mol/L, 1.3 mol/L, 1.4 mol/L, 1.5 mol/L, 1.6 mol/L, 1.7 mol/L, 1.8 mol/L, 1.9 mol/L, 2.0 mol/L, 2.1 mol/L, 2.2 mol/L or any value within 1.0-2.2 mol/L.
c. The precipitating agent includes sodium hydroxide and/or potassium hydroxide, and the complexing agent includes one or more of ammonium bicarbonate, ammonium carbonate, and ammonia water.
d. The complexing agent is used in a form of aqueous solution, and has a concentration of 0.3-8 mol/L, and optionally, the concentration is 0.3-2.0 mol/L;
   optionally, the concentration of the aqueous solution of the complexing agent may be 0.3 mol/L, 0.4 mol/L, 0.5 mol/L, 0.6 mol/L, 0.7 mol/L, 0.8 mol/L, 0.9 mol/L, 1.0 mol/L, 1.1 mol/L, 1.2 mol/L, 1.3 mol/L, 1.4 mol/L, 1.5 mol/L, 1.6 mol/L, 1.7 mol/L, 1.8 mol/L, 1.9 mol/L, 2.0 mol/L, 3.0 mol/L, 4.0 mol/L, 5.0 mol/L, 6.0 mol/L, 7.0 mol/L, 8.0 mol/L or any value within 0.3-8.0 mol/L.
e. The water used for preparing the base solution has a temperature of 40-60 °C, and the prepared base solution is heated to have a temperature of 40-60 °C; and pH of the base solution is 10-12;
   optionally, the water may have a temperature of 40 °C, 50 °C, 60 °C or any value within 40-60 °C, and the pH of the base solution may be 10.0, 10.5, 11.0, 11.5, 12.0 or any value within 10-12.
f. A flow rate of adding the mixed salt solution to the base solution is 2%/h - 8%/h of an available volume of a reaction kettle, a flow rate of adding the precipitating agent to the base solution is 0.08%/h - 0.32%/h, and a flow rate of adding the complexing agent to the base solution is 0.04%/h - 0.16%/h;
   optionally, the flow rate of adding the mixed salt solution to the base solution may be 2%/h, 3%/h, 4%/h, 5%/h, 6%/h, 7%/h, 8%/h or any value within 2-8%/h of the available volume of the reaction kettle, the flow rate of adding the precipitating agent to the base solution may be 0.08%/h, 0.10%/h, 0.15%/h, 0.20%/h, 0.25%/h, 0.30%/h, 0.32%/h or any value within 0.08%/h - 0.32%/h of the available volume of the reaction kettle, the flow rate of adding the complexing agent to the base solution is 0.04%/h, 0.05%/h, 0.06%/h, 0.07%/h, 0.08%/h, 0.09%/h, 0.10%/h, 0.11%/h, 0.12%/h, 0.13%/h, 0.14%/h, 0.15%/h, 0.16%/h or any value therebetween of the available volume of the reaction kettle;
g. the co-precipitation reaction is carried out under a stirring condition, and a stirring speed is 300-1000 r/min;
   optionally, the stirring speed may be 300 r/min, 400 r/min, 500 r/min, 600 r/min, 700 r/min, 800 r/min, 900 r/min, 1000 r/min or any value within 300-1000 r/min.
h. An end point of the co-precipitation reaction is the D50 of the sodium-ion battery positive electrode material precursor reaching 3-14 µm;
   optionally, D50 of an end product of the co-precipitation reaction may be 3 µm, 4 µm, 5 µm, 6 µm, 7 µm, 8 µm, 9 µm, 10 µm, 11 µm, 12 µm, 13 µm, 14 µm or any value within 3-14 µm.
i. An end point of the water washing (namely, a standard of completion of the water washing) is electrical conductivity of a washing solution (namely, a mother liquor obtained by filtering after the washing) being less than 50 µS/cm. The drying is performed at a temperature of 120-180 °C, and lasts for 10-16 h, and an end point of the drying is a moisture content of the materials being less than or equal to 0.6 wt%;
   optionally, the electrical conductivity of the washing solution at the end point of the water washing may be 10 µS/cm, 20 µS/cm, 30 µS/cm, 40 µS/cm, 49 µS/cm or any value less than 50 µS/cm. The temperature of the drying may be 120 °C, 130 °C, 140 °C, 150 °C, 160 °C, 170 °C, 180 °C or any value within 120-180 °C, and the time may be 10 h, 11 h, 12 h, 13 h, 14 h, 15 h, 16 h or any value within 10-16 h. The moisture content of the materials at the end point of the drying may be 0.1 wt%, 0.2 wt%, 0.3 wt%, 0.4 wt%, 0.5 wt%, 0.6 wt% or less than or equal to 0.6 wt%.

In an optional embodiment, a staged control is performed on the flow rates of adding the remaining complexing agent, the remaining precipitating agent and the mixed salt solution to the base solution.

In an optional embodiment, the staged control includes:

In a first stage, a first flow rate of adding the mixed salt solution to the base solution is controlled to be 2%/h - 4%/h of the available volume of the reaction kettle, a first flow rate of adding the precipitating agent to the base solution is controlled to be 0.08%/h - 0.16%/h of the available volume of the reaction kettle, and a first flow rate of adding the complexing agent to the base solution is controlled to be 0.04%/h - 0.08%/h of the available volume of the reaction kettle, until D50 of a first precipitate obtained is 3-5 µm.

Optionally, the first flow rate of adding the mixed salt solution to the base solution may be 2%/h, 3%/h, 4%/h or any value within 2%/h - 4%/h of the available volume of the reaction kettle; the first flow rate of adding the precipitating agent to the base solution may be 0.08%/h, 0.09%/h, 0.10%/h, 0.11%/h, 0.12%/h, 0.13%/h, 0.14%/h, 0.15%/h, 0.16%/h or any value within 0.08%/h - 0.16%/h of an available volume of the reaction kettle of the complexing agent; and the first flow rate of adding the complexing agent to the base solution may be 0.04%/h, 0.05%/h, 0.06%/h, 0.07%/h, 0.08%/h or any value within 0.04%/h - 0.08%/h of an available volume of the reaction kettle of the precipitating agent;

In a second stage, a second flow rate of adding the mixed salt solution to the base solution is controlled to be 4%/h - 8%/h of the available volume of the reaction kettle, a second flow rate of adding the precipitating agent to the base solution is controlled to be 0.16%/h - 0.32%/h of the available volume of the reaction kettle, and a second flow rate of adding the complexing agent to the base solution is controlled to be 0.08%/h - 0.16%/h of the available volume of the reaction kettle, until D50 of the sodium-ion battery positive electrode material precursor is 6-14 µm.

Optionally, the second flow rate of adding the mixed salt solution to the base solution may be 4%/h, 5%/h, 6%/h, 7%/h, 8%/h or any value within 4%/h-8%/h of the available volume of the reaction kettle, the second flow rate of adding the precipitating agent to the base solution may be controlled to be 0.16%/h, 0.18%/h, 0.20%/h, 0.22%/h, 0.24%/h, 0.26%/h, 0.28%/h, 0.30%/h, 0.32%/h or any value within 0.16%/h -0.32%/h of the available volume of the reaction kettle, and the second flow rate of adding the complexing agent to the base solution may be controlled to be 0.08%/h, 0.09%/h, 0.10%/h, 0.11%/h, 0.12%/h, 0.13%/h, 0.14%/h, 0.15%/h, 0.16%/h or any value within 0.08%/h - 0.16%/h of the available volume of the reaction kettle.

Performing the staged control on the flow rate of the mixed salt helps to retain certain sulfur content in precursor structure, and facilitates obtaining required sulfur content in a washing stage.

The present disclosure further provides a sodium-ion battery positive electrode material, which is prepared through reaction of a sodium-ion battery positive electrode material precursor with a sodium source.

In an optional embodiment, a molar ratio of a sum of nickel, manganese and iron in the sodium-ion battery positive electrode material precursor to sodium in the sodium source is 1 : (1.02-1.07).

In an optional embodiment, temperature programming is performed in the reaction for calcination:
heating to 780-880 °C at a heating rate of 2-4 °C/min to perform the calcination for 10-20 hours.

Optionally, the molar ratio of the sum of nickel, manganese and iron in the sodium-ion battery positive electrode material precursor to sodium in the sodium source may be 1 : 1.02, 1 : 1.03, 1 : 1.04, 1 : 1.05, 1 : 1.06, 1 : 1.07 or any value within 1 : (1.02-1.07). The heating rate may be 2 °C/min, 3 °C/min, 4 °C/min or any value within 2-4 °C/min. A heating end point may be 780 °C, 800 °C, 820 °C, 840 °C, 860 °C, 880 °C or any value within 780-880 °C. The calcining may last for 10 hours, 12 hours, 14 hours, 16 hours, 18 hours, 20 hours or any value within 10-20 hours. The present disclosure further provides a sodium-ion battery, and raw materials thereof include a sodium-ion battery positive electrode material.

The present disclosure further provides an electrical device, including a sodium-ion battery.

It should be noted that the electrical device mentioned herein may be an electric vehicle, a power bank, a mobile phone and so on.

The embodiments of the present disclosure will be described in detail below in combination with specific examples, while those skilled in the art would understand that the following examples are merely used to illustrate the present disclosure, but should not be considered as limitation to the scope of the present disclosure. If no specific conditions are specified in the examples, they are carried out under normal conditions or conditions recommended by manufacturers. If the manufacturers of reagents or apparatus used are not specified, they are conventional products commercially available.

### Example 1

The present example provides a sodium-ion battery positive electrode material precursor, and a preparation method thereof is as follows:

Nickel sulfate, manganese sulfate, and ferrous sulfate (in a molar ratio of 1:1:1) were formulated into a 2 mol/L mixed salt solution. To a reaction kettle with a stirring device, 50 °C deionized water, a 10 mol/L sodium hydroxide solution and 8 mol/L ammonia water were added and mixed to prepare a base solution with pH of 11.5. The reaction kettle was heated to 50 °C, and the ammonia water, the sodium hydroxide solution, and the mixed salt solution were slowly added at a stirring speed of 600 r/min. A first flow rate of adding the mixed salt solution to the base solution was 2%/h of an available volume of the reaction kettle, a first flow rate of adding the sodium hydroxide solution to the base solution was 0.08%/h of the available volume of the reaction kettle, and a first flow rate of adding the ammonia water to the base solution was 0.04%/h of the available volume of the reaction kettle, until D50 of a first precipitate obtained was 3.0 µm. Then a second flow rate of the mixed salt solution was increased to 4%/h of the available volume of the reaction kettle, and second flow rates of the ammonia water solution and the sodium hydroxide solution were synchronously adjusted respectively to 0.12%/h and 0.20%/h of the available volume of the reaction kettle, until D50 of the sodium-ion battery positive electrode material precursor was 10.0 µm.

Precipitate of the above sodium-ion battery positive electrode material precursor was centrifuged and washed, and subjected to multiple times of alkali washing with a 0.5 mol/L sodium hydroxide solution, and then multiple times of water washing with 70 °C deionized water. When electrical conductivity of mother liquor obtained by filtering after the water washing was less than 50 µS/cm, the washing might be considered to be completed, similarly hereinafter.

Solid matters after centrifugation and washing were dispersed, placed in a blowing-type oven, and dried and dehydrated for 12 h under a condition of 120 °C. An end point of the drying was a moisture content of the materials being 0.4 wt%, and the materials were taken out and stored in a sealed manner.

The resulting dried materials were subjected to processes such as sieving and demagnetization, so as to obtain the sodium-ion battery positive electrode material precursor, with a molecular formula of Ni_{0.33}Mn_{0.33}Fe_{0.34}(OH)₂.

FIG. 1 is a scanning electron micrograph of the resulting sodium-ion battery positive electrode material precursor. FIG. 1 shows that the prepared sodium-ion battery positive electrode material precursor is of a spherical structure with a good degree of sphericity, and a narrow particle size distribution. FIG. 2 is an XRD spectrum of the resulting sodium-ion battery positive electrode material precursor. The XRD of FIG. 2 shows that the sodium-ion battery positive electrode material precursor is corresponding to α-type hydroxide.

The present Example 1 further provides a sodium-ion battery positive electrode material, and a preparation method thereof is as follows:

The resulting precursor and sodium carbonate were mixed according to an elemental molar ratio of (Ni+Mn+Fe) : Na = 1: 1.05, then the mixture was heated in a muffle furnace to 830 °C at a heating rate of 3 °C/min, calcined for 15 hours, sieved after cooling, then assembled into batteries, and battery performances were tested at 2-4.2 V.

### Examples 2-15 and Comparative Examples 1-3

Reaction stages were the same as those in Example 1, and nickel-iron-manganese ternary precipitates were obtained.

The above precipitates of the precursors for sodium-ion battery positive electrode material were centrifuged and washed, and subjected to multiple times of alkali washing with a 0.5 mol/L sodium hydroxide solution, and then multiple times of water washing with 70 °C deionized water. The number of times of the alkali washing and the water washing, durations of the washing and amounts of alkali liquor and water used in the washing were adjusted, so that contents of Na impurities and S impurities were at different levels. Specific values thereof are as shown in Table 1.

Subsequent steps of drying process, sintering into a positive electrode material and preparing a battery were the same as those in Example 1.

### Examples 16 and 17 and Comparative Example 4

Nickel sulfate, manganese sulfate, and ferrous sulfate (in a molar ratio of 2:4:4) were formulated into a 2 mol/L mixed salt solution. To a reaction kettle with a stirring device, 40 °C deionized water, a 10 mol/L sodium hydroxide solution and 8 mol/L ammonia water were added and mixed to prepare a base solution with pH of 11.5. The reaction kettle was heated to 40 °C, and the ammonia water, the sodium hydroxide solution, and the mixed salt solution were slowly added at a stirring speed of 1000 r/min. A first flow rate of adding the mixed salt solution to the base solution was 4%/h of an available volume of the reaction kettle, a first flow rate of adding the sodium hydroxide solution to the base solution was 0.16%h of the available volume of the reaction kettle, and a first flow rate of adding ammonia water to the base solution was 0.08%/h of the available volume of the reaction kettle, until D50 of a first precipitate obtained grew to 5.0 µm. Then a second flow rate of the mixed salt solution was increased to 8%/h of the available volume of the reaction kettle, and second flow rates of the ammonia water solution and the sodium hydroxide solution were synchronously adjusted respectively to 0.12%/h and 0.20%/h of the available volume of the reaction kettle, until D50 of the sodium-ion battery positive electrode material precursor grew to 8.0 µm. When the D50 of the precursor reached 8.0 µm, material feeding was stopped.

Precipitate of the above sodium-ion battery positive electrode material precursor was centrifuged and washed, and subjected to multiple times of alkali washing with a 0.5 mol/L sodium hydroxide solution, and then multiple times of water washing with 70 °C deionized water. The number of times of the alkali washing and the water washing, durations of the washing and amounts of alkali liquor and water used in the washing were adjusted, so that contents of Na impurities and S impurities were at different levels. Specific values thereof are as shown in Table 1

Subsequent steps of drying process, sintering into a positive electrode material and preparing a battery were the same as those in Example 1. A molecular formula of the obtained sodium-ion battery positive electrode material precursor is Ni_{0.2}Mn_{0.4}Fe_{0.4}(OH)₂.

### Comparative Example 5

Nickel sulfate, manganese sulfate, and ferrous sulfate (in a molar ratio of 2:4:4) were formulated into a 2 mol/L mixed salt solution. To a reaction kettle with a stirring device, 40 °C deionized water, a 10 mol/L sodium hydroxide solution and 8 mol/L ammonia water were added and mixed to prepare a base solution with pH of 11.5. The reaction kettle was heated to 40 °C, and the ammonia water, the sodium hydroxide solution, and the mixed salt solution were slowly added at a stirring speed of 1000 r/min. A first flow rate of adding the mixed salt solution to the base solution was 8%/h of an available volume of the reaction kettle, a first flow rate of adding the sodium hydroxide solution to the base solution was 0.32%h of the available volume of the reaction kettle, a first flow rate of adding the ammonia water to the base solution was 0.16%/h of the available volume of the reaction kettle. When D50 of the sodium-ion battery positive electrode material precursor grew to 8.0 µm, material feeding was stopped.

The above precipitate was centrifuged and washed, wherein a washing method was consistent with that in Example 16, and contents of Na impurities and S impurities are as shown in Table 1.

Subsequent steps of drying process, sintering into a positive electrode material and preparing a battery were the same as those in Example 16. A molecular formula of the obtained sodium-ion battery positive electrode material precursor is Ni_{0.2}Mn_{0.4}Fe_{0.4}(OH)₂.

**Table 1 Relevant Data in Examples and Comparative Examples**

| Parameter | D50 (µm) | Na (ppm) | S (ppm) | Na/S | TD (g/cm³) | BET (m²/g) | 0.1C Initial Discharge Capacity (mAh/g) | 0.1C First-Cycle Charge and Discharge Efficiency% | 1C Initial Discharge Capacity (mAh/g) | 1C 50-cycle Capacity Retention Rate (%) |
|---|---|---|---|---|---|---|---|---|---|---|
| Ni_{0.33}Mn_{0.33}Fe_{0.34}(OH)₂, S≈400ppm, Na/S≤1.5 | | | | | | | | | | |
| Example 1 | 9.98 | 210 | 475 | 0.442 | 2.07 | 6.66 | 162.3 | 88.94 | 151.3 | 78.20 |
| Example 2 | 10.12 | 340 | 385 | 0.883 | 2.09 | 7.13 | 161.2 | 88.52 | 150.2 | 78.08 |

| Ni_{0.33}Mn_{0.33}Fe_{0.34}(OH)₂, S≈900 ppm, Na/S≤1.5 | | | | | | | | | | |
|---|---|---|---|---|---|---|---|---|---|---|
| Example 3 | 10.01 | 202 | 800 | 0.253 | 2.08 | 7.32 | 164.6 | 89.82 | 153.4 | 78.46 |
| Example 4 | 9.88 | 850 | 870 | 0.977 | 2.05 | 7.66 | 163.6 | 88.83 | 151.9 | 78.24 |
| Example 5 | 9.96 | 1480 | 994 | 1.489 | 2.09 | 6.53 | 160.8 | 88.14 | 148.1 | 77.99 |

| Ni_{0.33}Mn_{0.33}Fe_{0.34}(OH)₂, S≈1800 ppm, Na/S≤1.5 | | | | | | | | | | |
|---|---|---|---|---|---|---|---|---|---|---|
| Example 6 | 9.75 | 247 | 1742 | 0.142 | 2.06 | 7.48 | 167.6 | 90.33 | 154.9 | 78.69 |
| Example 7 | 9.86 | 790 | 1863 | 0.424 | 2.06 | 7.89 | 166.2 | 90.06 | 153.6 | 78.38 |
| Example 8 | 10.06 | 2190 | 1929 | 1.135 | 2.05 | 7.12 | 164.8 | 89.16 | 152.2 | 78.18 |

| Ni_{0.33}Mn_{0.33}Fe_{0.34}(OH)₂, S≈2600 ppm, Na/S≤1.5 | | | | | | | | | | |
|---|---|---|---|---|---|---|---|---|---|---|
| Example 9 | 10.13 | 160 | 2675 | 0.060 | 2.12 | 6.78 | 168.2 | 90.53 | 155.6 | 79.06 |
| Example 10 | 10.05 | 980 | 2613 | 0.375 | 2.1 | 7.05 | 166.3 | 89.66 | 153.7 | 78.26 |
| Example 11 | 9.83 | 2054 | 2583 | 0.795 | 2.06 | 7.73 | 163.8 | 89.17 | 151.3 | 78.10 |
| Example 12 | 9.97 | 3124 | 2658 | 1.175 | 2.07 | 6.86 | 163.0 | 87.35 | 150.2 | 77.83 |

| Ni_{0.33}Mn_{0.33}Fe_{0.34}(OH)₂, S≈3800 ppm, Na/S≤1.5 | | | | | | | | | | |
|---|---|---|---|---|---|---|---|---|---|---|
| Example 13 | 10.15 | 239 | 3701 | 0.065 | 2.1 | 7.22 | 163.4 | 88.82 | 152.4 | 78.42 |
| Example 14 | 10.2 | 1050 | 3854 | 0.272 | 2.13 | 5.99 | 162.9 | 88.53 | 150.1 | 77.93 |
| Example 15 | 10.06 | 2237 | 3946 | 0.567 | 2.06 | 7.96 | 161 | 88.03 | 147.9 | 77.82 |

| Ni_{0.33}Mn_{0.33}Fe_{0.34}(OH)₂, S>4000ppm, Na/S≤1.5 | | | | | | | | | | |
|---|---|---|---|---|---|---|---|---|---|---|
| Comparative Example 1 | 9.89 | 1542 | 4846 | 0.318 | 2.05 | 7.77 | 157.1 | 87.27 | 144.5 | 76.35 |

| Ni_{0.33}Mn_{0.33}Fe_{0.34}(OH)₂, S≤4000ppm, Na/S > 1.5 | | | | | | | | | | |
|---|---|---|---|---|---|---|---|---|---|---|
| Comparative Example 2 | 9.91 | 2346 | 1010 | 2.323 | 2.07 | 5.93 | 158.6 | 87.79 | 146.6 | 77.15 |
| Comparative Example 3 | 9.89 | 4023 | 2033 | 1.979 | 2.1 | 6.33 | 156.1 | 87.06 | 144.0 | 76.36 |

| Ni_{0.2}Mn_{0.4}Fe_{0.4}(OH)₂, S≤4000ppm, Na/S≤1.5 | | | | | | | | | | |
|---|---|---|---|---|---|---|---|---|---|---|
| Example 16 | 8.06 | 453 | 1026 | 0.442 | 2.02 | 7.98 | 136.6 | 88.43 | 125.4 | 78.12 |
| Example 17 | 7.91 | 410 | 2124 | 0.193 | 1.99 | 8.24 | 138.8 | 89.38 | 126.6 | 78.76 |

| Ni_{0.2}Mn_{0.4}Fe_{0.4}(OH)₂, S>4000ppm, Na/S≤1.5 | | | | | | | | | | |
|---|---|---|---|---|---|---|---|---|---|---|
| Comparative Example 4 | 7.86 | 496 | 4368 | 0.114 | 2.01 | 8.06 | 132.4 | 86.36 | 119.9 | 76.46 |

| Ni_{0.2}Mn_{0.4}Fe_{0.4}(OH)₂, S≤4000ppm, Na/S≤1.5, Constant flow feeding | | | | | | | | | | |
|---|---|---|---|---|---|---|---|---|---|---|
| Comparative Example 5 | 7.96 | 566 | 448 | 1.263 | 2.01 | 8.23 | 135.2 | 87.36 | 124.6 | 77.36 |

It may be respectively seen from Examples 1 and 2, Examples 3-5, Examples 6-8, Examples 9-12 and Examples 13-15 in Table 1 that when S ≤ 4000 ppm, at the same level of sulfur content, the lower a sodium-sulfur ratio is, the better the performances of the material are.

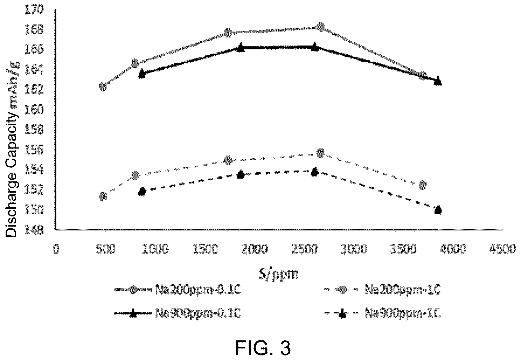

FIG. 3 is a chart of changing trend of discharge capacity with sulfur content in some examples. It may be seen from FIG. 3 that for Ni_{0.33}Mn_{0.33}Fe_{0.34}(OH)₂, when a sodium content level is equivalent, the increase of S content may improve the battery capacity and rate capability, but after the S content is increased to a certain value, the battery capacity and rate capability are reduced. In the above, preferably, S is 800-3700 ppm, Na/S is ≤1.18, 0.1C initial discharge capacity may be ≥ 163 mAh/g, and 50-cycle capacity retention rate is ≥ 77.83%; most preferably S is 1700-2800 ppm, Na/S is ≤ 0.45, 0.1C initial discharge capacity may be ≥166 mAh/g, and 50-cycle retention rate is ≥ 78.2%. It may be seen from Comparative Example 1 that when S>4000 ppm, various performances are obviously reduced. It may be seen from Comparative Examples 2 and 3 that when Na/S > 1.5, various performances are also obviously reduced. For Ni_{0.2}Mn_{0.4}Fe_{0.4}(OH)₂, Examples 16 and 17 and Comparative Example 4 also have the same characteristics. Therefore, the presence of trace non-sodium sulfate within a specific range has a key effect in improving the performances of the material, and the lower the sodium-sulfur ratio is, the better the performances of the material are.

Through comparison between Example 16 and Comparative Example 5, when only material feeding flow is changed to large flow throughout, while the washing method and others are unchanged, the sulfur content of the precursor is reduced, and the sodium-sulfur ratio is higher, which results in reduced performances. Therefore, performing the staged control on the flow rate of the mixed salt is beneficial for retaining certain sulfur content in precursor structure, and makes it easier to obtain the precursor material having the sulfur content and the sodium-sulfur ratio within the above specific ranges.

Finally, it should be indicated that the various examples above are merely used for illustrating the technical solutions of the present disclosure, rather than limiting the present disclosure. While the detailed description is made to the present disclosure with reference to the various preceding examples, those ordinarily skilled in the art should understand that they still could modify the technical solutions recited in the various preceding examples, or make equivalent substitutions to some or all of the technical features therein. These modifications or substitutions do not make the essence of the corresponding technical solutions depart from the scope of the technical solutions of the various examples of the present disclosure.

Furthermore, those skilled in the art could understand that although some of the examples herein include certain features, but not others, included in other examples, combinations of features of different examples are intended to be within the scope of the present disclosure and form different examples. For example, in the claims, any of the claimed examples may be used in any combination. The information disclosed in the Background Art section is only for enhancement of understanding of the general background of the present disclosure and should not be regarded as an acknowledgment or any form of suggestion that this information forms the prior art already known to those skilled in the art.

### INDUSTRIAL APPLICABILITY

The present disclosure provides the sodium-ion battery positive electrode material precursor and the preparation method therefor, the sodium-ion battery positive electrode material, the sodium-ion battery and the electrical device, relating to the field of batteries. The sodium-ion battery positive electrode material precursor has the general chemical formula of NiₓMn_{y}Fe_{1-x-y}(OH)₂, where 0.15≤x≤0.35, and 0.2≤y≤0.5; the content of S element in the sodium-ion battery positive electrode material precursor is ≤4000 ppm, and the Na/S mass ratio is ≤1.5. For the sodium-ion battery positive electrode material precursor provided in the present disclosure, the prepared positive electrode material has good element uniformity, few structural defects, controllable particle size, good degree of sphericity, and high energy density. With the retention of the content of trace sulfur impurities, at the same sulfur content level, the lower the sodium-sulfur ratio is, the better the battery capacity, initial efficiency and cycle performance are.

In addition, it may be understood that the sodium-ion battery positive electrode material precursor and the preparation method therefor, the sodium-ion battery positive electrode material, the sodium-ion battery and the electrical device in the present disclosure are reproducible, and is applicable in various industrial applications. For example, the sodium-ion battery positive electrode material precursor and the preparation method therefor, the sodium-ion battery positive electrode material, the sodium-ion battery and the electrical device in the present disclosure may is applicable in the field of batteries.

## Claims

1. A sodium-ion battery positive electrode material precursor, **characterized by** having a general chemical formula of NiₓMn_{y}Fe_{1-x-y}(OH)₂, where 0.15≤x≤0.35 and 0.2≤y≤0.5, wherein
a content of S element in the sodium-ion battery positive electrode material precursor is ≤ 4000 ppm.

2. The sodium-ion battery positive electrode material precursor according to claim 1, **characterized in that** the precursor further contains Na, and a Na/S mass ratio is ≤ 1.5.

3. The sodium-ion battery positive electrode material precursor according to claim 2, **characterized in that** at least one of following conditions is met:
A, the content of the S element in the sodium-ion battery positive electrode material precursor is 800-3700 ppm, and the Na/S mass ratio is ≤ 1.18; optionally, the content of the S element in the sodium-ion battery positive electrode material precursor is 1700-2800 ppm, and the Na/S mass ratio is ≤ 0.45;
B, D50 of the sodium-ion battery positive electrode material precursor is 3-14 µm, preferably 5-10 µm;
C, a specific surface area of the sodium-ion battery positive electrode material precursor is 6-11 m²/g, preferably 6-8 m²/g;
D, a tap density of the sodium-ion battery positive electrode material precursor is ≥1.7 g/cm³, preferably 1.9-2.3 g/cm³; and
E, the sodium-ion battery positive electrode material precursor is spherical or spheroidal.

4. A preparation method for sodium-ion battery positive electrode material precursor for preparing the sodium-ion battery positive electrode material precursor according to any one of claims 1 to 3, **characterized by** comprising:
mixing raw materials comprising a nickel source, a manganese source, a ferrous source and water to obtain a mixed salt solution, and mixing materials including water, a part of a complexing agent and a part of a precipitating agent to obtain a base solution; and
adding the remaining complexing agent, the remaining precipitating agent and the mixed salt solution to the base solution to carry out a co-precipitation reaction, performing a solid-liquid separation to obtain solid matters, and then performing alkali washing, water washing, and drying, to obtain the sodium-ion battery positive electrode material precursor, wherein
at least one of the nickel source, the manganese source and the ferrous source comprises sulfate.

5. The preparation method for sodium-ion battery positive electrode material precursor according to claim 4, **characterized in that** at least one of following conditions is met:
a, the nickel source comprises one or more of nickel sulfate, nickel nitrate, and nickel acetate, the manganese source comprises one or more of manganese sulfate, manganese nitrate, and manganese acetate, and the ferrous source comprises one or more of ferrous sulfate, ferrous nitrate, and ferrous chloride;
b, a concentration of the mixed salt solution is 1.0-2.2 mol/L;
c, the precipitating agent comprises sodium hydroxide and/or potassium hydroxide, and the complexing agent comprises one or more of ammonium bicarbonate, ammonium carbonate, and ammonia water;
d, the complexing agent is used in a form of aqueous solution, and has a concentration of 0.3-8 mol/L, and optionally, the concentration is 0.3-2.0 mol/L;
e, the water used for preparing the base solution has a temperature of 40-60 °C, and pH of the base solution is 10-12;
f, a flow rate of adding the mixed salt solution to the base solution is 2%/h - 8%/h of an available volume of a reaction kettle, a flow rate of adding the precipitating agent to the base solution is 0.08%/h - 0.32%/h of the available volume of the reaction kettle, and a flow rate of adding the complexing agent to the base solution is 0.04%/h - 0.16%/h of the available volume of the reaction kettle;
g, the co-precipitation reaction is carried out under a stirring condition, and a stirring speed is 300-1000 r/min;
h, an end point of the co-precipitation reaction is the D50 of the sodium-ion battery positive electrode material precursor reaching 3-14 µm; and
i, a standard of completion of the water washing is electrical conductivity of a mother liquor obtained by filtering after the washing being less than 50 µS/cm, the drying is performed at a temperature of 120-180 °C, and lasts for 10-16 h, and an end point of the drying is a moisture content of the materials being less than or equal to 0.6 wt%.

6. The preparation method for sodium-ion battery positive electrode material precursor according to claim 4 or 5, **characterized in that** a staged control is performed on flow rates of adding the remaining complexing agent, the remaining precipitating agent and the mixed salt solution to the base solution.

7. The preparation method for sodium-ion battery positive electrode material precursor according to claim 6, **characterized in that** the staged control comprises:
in a first stage, a first flow rate of adding the mixed salt solution to the base solution is controlled to be 2%/h - 4%/h of an available volume of a reaction kettle, a first flow rate of adding the precipitating agent to the base solution is controlled to be 0.08%/h - 0.16%/h of the available volume of the reaction kettle, and a first flow rate of adding the complexing agent to the base solution is controlled to be 0.04%/h - 0.08%/h of the available volume of the reaction kettle, until D50 of a first precipitate obtained is 3-5 µm; and
in a second stage, a second flow rate of adding the mixed salt solution to the base solution is controlled to be 4%/h - 8%/h of the available volume of the reaction kettle, a second flow rate of adding the precipitating agent to the base solution is controlled to be 0.16%/h - 0.32%/h of the available volume of the reaction kettle, and a second flow rate of adding the complexing agent to the base solution is controlled to be 0.08%/h - 0.16%/h of the available volume of the reaction kettle, until D50 of the sodium-ion battery positive electrode material precursor is 6-14 µm.

8. A sodium-ion battery positive electrode material, prepared through reaction of the sodium-ion battery positive electrode material precursor according to any one of claims 1 to 3 with a sodium source, **characterized in that**
optionally, a molar ratio of a sum of nickel, manganese and iron in the sodium-ion battery positive electrode material precursor to sodium in the sodium source is 1 : (1.02-1.07); and
optionally, temperature programming is performed in the reaction for calcination:
heating to 780-880 °C at a heating rate of 2-4 °C/min to perform the calcination for 10-20 hours.

9. A sodium-ion battery, **characterized by** raw materials thereof comprising the sodium-ion battery positive electrode material according to claim 8.

10. An electrical device, **characterized by** comprising the sodium-ion battery according to claim 9.
